# NEW EUROPEAN PATENT SPECIFICATION

(11) **EP 1 261 558 B2**
(45) Date of publication and mention of the opposition decision: **02.07.2014**
(45) Mention of the grant of the patent: 03.11.2004
(21) Application number: 01914608.3
(22) Date of filing: 02.03.2001
(51) Int. Cl.: C03C 17/36

(54) **LOW-EMISSIVITY GLASS COATINGS HAVING A LAYER OF SILICON OXYNITRIDE AND METHODS OF MAKING SAME**
GLASBESCHICHTUNGEN MIT NIEDRIGER EMISSIVITÄT DIE EINEN SILIZIUM-OXYNITRID FILM ENTHALTEN UND VERFAHREN ZUR HERSTELLUNG DIESER BESCHICHTUNGEN
REVETEMENT DE VERRE A FAIBLE EMISSIVITE COMPORTANT UNE COUCHE D'OXYNITRURE DE SILICIUM, ET PROCEDE DE FABRICATION ASSOCIE

(30) Priority: 06.03.2000 US 187040 P; 27.02.2001 US 793406
(43) Date of publication of application: 04.12.2002
(73) Proprietor: Guardian Industries, Inc., Warren, MI 48089 (US)
(72) Inventor: LAIRD, Ronald, E., Washtenaw, MI 48130 (US)
(74) Representative: Hess, Peter K. G.
(86) International application number: PCT/US2001/006636
(87) International publication number: WO 2001/066482

(56) References cited:
- EP-A- 0 796 825
- EP-A1- 0 279 550
- EP-A1- 0 546 302
- EP-A2- 0 718 250
- FR-A- 2 766 174
- US-A- 5 085 926
- US-A- 5 344 718
- US-A- 5 948 538
- US-A- 6 014 872
- T. LARSSON ET AL: 'A model for reactive sputtering with magnetrons' VACUUM vol. 39, no. 10, 01 January 1988 - 31 December 1988, pages 949 - 954
- T. LARSSON ET AL: 'A physical model for eliminating instabilities in reactive sputtering' J. VA. SCI. TECHNOL. AMERICAN VACUUM SOCIETY 01 January 1988 - 31 December 1988, pages 1832 - 1836
- L. PINARD ET AL: 'Optical losses of multilayer stacks synthesized with silicon oxynitride by r.f. magnetron sputtering' ELSEVIER SCIENCE 01 January 1998 - 31 December 1998, pages 126 - 133

## Description

The present invention relates generally to coatings for glass substrates. More specifically, the present invention relates to glass substrate coatings which exhibit low emissivity (so-called "low-E" coatings) and substantially no color characteristics.

### BACKGROUND AND SUMMARY OF THE INVENTION

Low-E coatings for glass are well known. In this regard, commonly owned U.S. Patent Nos. 5,344,718, 5,425,861, 5,770,321, 5,800,933 disclose coatings formed of a multiple layer coating "system". Generally, such conventional multiple layer low-E glass coatings have a layer of a transparent dielectric material (e.g., TiO₂, BiO₃, PbO or mixtures thereof) adjacent the glass substrate and a sequence of multiple layers of, for example, Si₃N₄, nickel (Ni), nichrome (Ni:Cr), nitrided nichrome (NiCrN) and/or silver (Ag). These conventional low-E coatings are, moreover, heat-treatable - that is, the coating is capable of being subjected to the elevated temperatures associated with conventional tempering, bending, heat-strengthening or heat-sealing processes without significantly adversely affecting its desirable characteristics.

While the conventional low-E coating systems disclosed in the above-cited U.S. patents are satisfactory, there exists a continual need to improve various properties of low-E coating systems generally. For example, continued improvements in the durability and/or color (or more accurately, lack of color) characteristics in low-E glass coatings are desired. Improvements in such characteristics are important to ensure that the coatings retain their low-E property for prolonged periods of time (even after being subjected to potentially abrasive environment encountered during the manufacturing process - e.g., the washing and cutting of glass articles having such low-E coatings) and have the desired light transmission properties. It is toward fulfilling such needs that the present invention is directed. The invention provides a solution according to any one of the claims 1 and 7.

Broadly, the present invention is embodied in low-E glass coatings having improved durability and transmissivity.

These and other aspects and advantages will become more apparent after careful consideration is given to the following detailed description of the preferred exemplary embodiments thereof.

### BRIEF DESCRIPTION OF THE ACCOMPANYING DRAWINGS

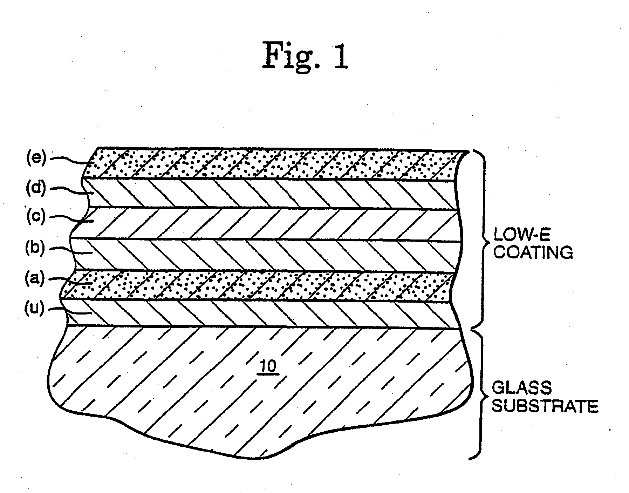

Reference will hereinafter be made to the accompanying drawings, wherein FIGURE 1 is a greatly enlarged cross-sectional schematic representation of a surface-coated glass article of this invention which includes a glass substrate and a multiple layer low-E coating system coated on a surface of the glass substrate.

### DETAILED DESCRIPTION OF THE INVENTION

Accompanying FIGURE 1 depicts in a schematic fashion one particularly preferred embodiment of the present invention. In this regard, the multiple layer low-E coating of the present invention will necessarily be applied onto a glass substrate 10 which is, in and of itself, highly conventional. Specifically, the glass substrate 10 is most preferably made by a conventional float process and is thus colloquially known as "float glass". Typical thicknesses of such float glass may be from 2 mm to 6 mm, but other glass thicknesses may be employed for purposes of the present invention. The composition of the glass forming the substrate 10 is not critical, but typically the glass substrate will be formed of one of the soda-lime-silica types of glass well known to those in this art.

The process and apparatus used to form the various layers comprising the low-E coating of the present invention may be a conventional multi-chamber (multi-target) sputter-coating system such as that disclosed generally in U.S. Patent No. 5,344,718. One particularly preferred sputter-coating system is commercially available from Airco, Inc. As is well known, the glass substrate 10 is advanced sequentially through the contiguous chambers or zones which have respective atmospheres to form sputter-coating layers of desired constituency and thickness.

As depicted in FIGURE 1, one particularly preferred low-E coating may be formed of the following layers and layer thicknesses (identified sequentially from adjacent the glass substrate 10 toward the outside):

| Layer | Constituent | Thickness Range (Å) | Thickness Preferred (Å) |
|---|---|---|---|
| (u) | transparent dielectric | 100-200 | about 125 |
| (a) | silicon oxynitride | 25-200 | about 125 |
| (b) | nichrome | 2-20 | about 10 |
| (c) | silver | 100-200 | about 145 |
| (d) | nichrome | 2-20 | about 10 |
| (e) | Si₃N₄ | 350-600 | about 480 |

The undercoat layer (u) in FIGURE 1 is selected so it has an index of refraction at 550 nm wavelength of 2.5 to 2.6, and preferably about 2.52. Preferably, the undercoat layer (u) includes at least one transparent dielectric selected from TiO₂, BiO₃, PbO and mixtures thereof. TiO₂ is especially preferred. The undercoat (u) may be a single layer of such dielectric materials or may be comprised of multiple layers of the same, or different, dielectric material.

In sputter-coating many of the layers, silicon (Si) targets are employed. Optionally, the Si may be admixed with an amount of stainless steel (e.g., no. 316) to achieve the desired end amount in the film layer. Optionally, aluminum (Al) may also be employed as a dopant in relatively small amounts (e.g., 8 % by weight).

Important to the present invention, the silicon oxynitride layer (a) is interposed between the transparent dielectric underlayer (u) and the nichrome layer (b). Most preferably, the silicon oxynitride layer (a) is sputter-coated in a gaseous atmosphere comprised of nitrogen, oxygen and argon, wherein at least between 5% to 50%, most preferably about 10%, of the gas is oxygen. A particularly preferred atmosphere for sputter-coating the silicon oxynitride layer (a) is about 30% N₂, about 10% O₂ and about 60% Ar₂.

The silicon oxynitride layer (a) is monolithic in its thickness. That is, by "monolithic" is meant that the layer (a) has a substantially uniform amount of silicon oxynitride between its interfacial boundaries with layers (u) and (b), respectively. Thus, the amount of silicon oxynitride does not change appreciably throughout the entire thickness dimension of layer (a).

A greater understanding of this invention will be achieved by careful consideration of the following non-limiting Examples.

### EXAMPLES

### Example I

A low emissivity coating comprised of layers (u) through (e) as identified generally in FIGURE 1 was applied onto a float glass substrate using a multi-chamber sputter-coater (Airco, Inc.) at a line speed of 4,45 m/min under the following conditions:

| **Layer (u)** | **TiO2 - 6 Dual C-MAG cathodes (12 Ti metal targets)** |
|---|---|
| | Three cathodes are in the first coat zone (CZ1) and three are in the second Coat Zone (CZ2). |
| | Each coat zone is run identically - DC Reactive sputtering |
| | Pressure = 0,467 Pa Gas Ratio (60% O2 / 40% Ar) Total gas flow = 1850 (sccm) Power - ~80 kW per target |

| **Layer (a)** | **SiOxNy - 3 Dual C-MAG cathodes (6 Plasma Sprayed Si/Al targets ~8% Al)** |
|---|---|
| | Bi-Polar Pulsed DC power |
| | Pressure = 0,333 Pa Gas Ratio (30% N2, 10% O2, 60% Ar) Total gas flow = 1425 sccm Power - ~7 kW per target |

| **Layer (b)** | **NiCr -1 Planar cathode (80% Ni / 20% Cr)** |
|---|---|
| | DC Sputtered |
| | Pressure = 0,333 Pa Gas Ratio (100% Ar) Total gas flow = 1125 sccm Power - ~3.0 kW per target |

| **Layer (c)** | **Ag - 1 Planar Cathode (100% Silver)** |
|---|---|
| | DC Sputtered |
| | Pressure = 0,333 Pa Gas Ratio (100% Ar) Total gas flow = 1125 sccm Power - ~6.75 kW per target |

| **Layer (d)** | **NiCr -1 Planar cathode (80% Ni / 20% Cr)** |
|---|---|
| | DC Sputtered |
| | Pressure = 0,333 Pa Gas Ratio (100% Ar) Total gas flow = 1125 sccm Power - ~3.0 kW per target |

| **Layer (e)** | **SixNy - 3 Dual C-MAG cathodes (6 Plasma Sprayed Si/Al targets ~8% Al)** |
|---|---|
| | Bi-Polar Pulsed DC power |
| | Pressure = 0,333 Pa Gas Ratio (60% N2, 40% Ar) Total gas flow = 2050 sccm Power - ~28 kW per target |

### Example II

Coated 15.2 cm x 43.2 cm glass test samples cut from larger glass sheets nominally 2.13 m in width and having lengths varying from 1.83 m, 3.30 m and 3.66 m which were prepared according to Example I were subjected to mechanical durability testing. Specifically, a 5.1 cm x 10.2 cm x 2.5 cm nylon brush was cyclically passed over the coating layer of each test sample in 500 cycles employing 150 grams of weight. The coated glass samples of the invention exhibited no damage after being subjected to such mechanical durability testing.

## Claims

1. A surface-coated glass article comprised of a glass substrate and a multiple layer low-E coating comprising the following layers formed on a surface of the glass substrate, from the surface outwardly:
(1) a layer, of transparent dielectric material;
(2) a layer of silicon oxynitride;
(3) a first layer of nickel or nichrome;
(4) a layer of silver;
(5) a second layer of nickel or nichrome;
(6) a layer of Si₃N₄.

2. The surface-coated glass article as in claim 1, wherein the layer of silicon oxy-nitride has a thickness of between 25-200 Å.

3. The surface-coated glass article of claim 1, wherein the dielectric material is at least one selected from the group consisting of TiO₂, BiO₃, PbO and mixtures thereof.

4. The surface-coated glass article of claim 3, wherein the dielectric material has an index of refraction (n) of 2.5-2.6 as measured at a wavelength of 550 nanometers.

5. The surface-coated glass article of claim 1, wherein the layers have the following thicknesses in Angstroms:
(1) between 100-200;
(2) between 25-200;
(3) between 2-20;
(4) between 100-200;
(5) between 2-20; and
(6) between 350-600.

6. The surface-coated glass article of claim 5, wherein the layers have the following thicknesses in Angstroms:
(1) about 125;
(2) about 125;
(3) about 10;
(4) about 145;
(5) about 10; and
(6) about 480.

7. A method of making a surface-coated glass article comprising sputtercoating on a surface of a glass substrate a multiple layer low-E coating comprising the following layers formed on a surface of the glass substrate, from the surface outwardly:
(1) a layer of transparent dielectric material;
(2) a layer of silicon oxynitride;
(3) a first layer of nickel or nichrome;
(4) a layer of silver;
(5) a second layer of nickel or nichrome;
(6) a layer of Si₃N₄.

8. The method of claim 7, wherein said layer of silicon oxynitride is formed by sputter-coating in a gaseous atmosphere comprised of nitrogen, oxygen and argon, wherein the oxygen is present in the atmosphere in an amount between 5 to 50%.

9. The method of claim 8, wherein oxygen is present in the atmosphere in an amount of about 10%.

10. The method of claim 9, wherein the atmosphere comprises about 30% nitrogen, about 10% oxygen and about 60% argon.

11. The method of any one of claims 7-10, wherein the sputter-coating of the silicon oxynitride layer includes using an aluminum-containing silicon target.

12. The method of claim 11, wherein the target includes about 8% by weight aluminum.

## Patentansprüche

1. Ein oberflächenbeschichteter Glasgegenstand, aufweisend ein Glassubstrat und eine Niederemissionsbeschichtung mit einer Mehrzahl von Schichten, wobei die Niederemissionsbeschichtung die folgenden Schichten aufweist, welche auf einer Oberfläche des Glassubstrates in der nachfolgenden Reihenfolge von der Oberfläche nach außen gebildet ist durch:
(1) eine Schicht eines transparenten dielektrischen Materials;
(2) eine Schicht Siliziumoxynitrid;
(3) eine erste Schicht Nickel oder Nickelchrom;
(4) eine Silberschicht;
(5) eine zweite Schicht Nickel oder Nickelchrom;
(6) eine Schicht Si₃N₄.

2. Der oberflächenbeschichtete Glasgegenstand gemäß Anspruch 1, wobei die Siliziumoxynitridschicht eine Dicke zwischen 25 und 200 Å aufweist.

3. Der oberflächenbeschichtete Glasgegenstand gemäß Anspruch 1, wobei das dielektrische Material zumindest ein Material umfasst aus einer Gruppe, bestehend aus TiO₂, BiO₃, PbO oder einer Mischung derselben.

4. Der oberflächenbeschichtete Glasgegenstand gemäß Anspruch 3, wobei das dielektrische Material einen Brechungsindex (n) zwischen 2,5 und 2,6 aufweist, welcher bei einer Wellenlange von 550 nm gemessen wird.

5. Der oberflächenbeschichtete Glasgegenstand gemäß Anspruch 1, wobei die Schichten in Å die folgenden Dicken aufweisen:
(1) zwischen 100 und 200;
(2) zwischen 25 und 200;
(3) zwischen 2 und 20;
(4) zwischen 100 und 200;
(5) zwischen 2 und 20; und
(6) zwischen 350 und 600.

6. Der oberflächenbeschichtete Glasgegenstand gemäß Anspruch 5, wobei die Schichten in Å die folgenden Dicken aufweisen:
(1) ungefähr 125;
(2) ungefähr 125;
(3) ungefähr 10;
(4) ungefähr 145;
(5) ungefähr 10; und
(6) ungefähr 480.

7. Verfahren zum Herstellen eines oberflächenbeschichteten Glasgegenstandes, aufweisend ein Sputter-Beschichten einer Oberfläche eines Glassubstrats mit einer Niederemissionsbeschichtung mit einer Mehrzahl von Schichten, aufweisend
(1) eine transparente Schicht eines dielektrischen Materials;
(2) eine Schicht Siliziumoxynitrid;
(3) eine erste Schicht Nickel oder Nickelchrom;
(4) eine Silberschicht;
(5) eine zweite Schicht Nickel oder Nickelchrom;
(6) eine Schicht Si₃N₄.

8. Verfahren gemäß Anspruch 7, wobei die Schicht Siliziumoxynitrid durch das Sputter-Beschichten in einer Gasatmosphäre gebildet wird, welche Stickstoff, Sauerstoff und Argon aufweist, wobei der Sauerstoff in der Atmosphäre in einer Menge zwischen 5 % und 50 % vorhanden ist.

9. Verfahren gemäß Anspruch 8, wobei in der Atmosphäre Sauerstoff in einer Menge von ungefähr 10 % vorhanden ist.

10. Verfahren gemäß Anspruch 9, wobei die Atmosphäre ungefähr 30 % Stickstoff, ungefähr 10 % Sauerstoff und ungefähr 60 % Argon aufweist.

11. Verfahren gemäß einem der Ansprüche 7 bis 10, wobei das Sputter-Beschichten der Schicht Siliziumoxynitrid die Verwendung eines Silizium-Targets umfasst, welches Aluminium enthält.

12. Verfahren gemäß Anspruch 11, wobei das Target ungefähr 8 Gewichts-% Aluminium umfasst.

## Revendications

1. Un article en verre revêtu en surface formé d'un substrat de verre et d'un revêtement à faible émissivité à couches multiples comprenant les couches suivantes formées sur une surface du substrat de verre, à partir de la surface en allant vers l'extérieur :
1) une couche de matériau diélectrique transparent ;
2) une couche d'oxynitrure de silicium ;
3) une première couche de nickel ou de nichrome ;
4) une couche d'argent ;
5) une seconde couche de nickel ou de nichrome ;
6) une couche de Si₃N₄.

2. L'article en verre revêtu en surface de la revendication 1, dans lequel la couche d'oxynitrure de silicium présente une épaisseur comprise entre 25 et 200 Å.

3. L'article en verre revêtu en surface de la revendication 1, dans lequel le matériau diélectrique est au moins l'un choisi dans le groupe constitué par TiO₂, BiO₃, PbO et les mélanges de ceux-ci.

4. L'article en verre revêtu en surface de la revendication 3, dans lequel le matériau diélectrique présente un indice de réfraction (n) de 2,5 à 2,6, mesuré à une longueur d'onde de 550 nanomètres.

5. L'article en verre revêtu en surface de la revendication 1, dans lequel les couches présentent les épaisseurs suivantes en angstroems :
1) entre 100 et 200 ;
2) entre 25 et 200 ;
3) entre 2 et 20 ;
4) entre 100 et 200 ;
5) entre 2 et 20 ; et
6) entre 350 et 600.

6. L'article en verre revêtu en surface de la revendication 5, dans lequel les couches présentent les épaisseurs suivantes en angstroems :
1) environ 125 ;
2) environ 125 ;
3) environ 10 ;
4) environ 145 ;
5) environ 10 ; et
6) environ 480.

7. Un procédé de fabrication d'un article en verre revêtu en surface, comprenant le revêtement par pulvérisation cathodique sur une surface d'un substrat en verre d'un revêtement à faible émissivité à couches multiples comprenant les couches suivantes formées sur une surface du substrat en verre, à partir de la surface en allant vers l'extérieur :
1) une couche de matériau diélectrique transparent ;
2) une couche d'oxynitrure de silicium ;
3) une première couche de nickel ou de nichrome ;
4) une couche d'argent ;
5) une seconde couche de nickel ou de nichrome ;
6) une couche de Si₃N₄.

8. Le procédé de la revendication 7, dans lequel ladite couche d'oxynitrure de silicium est formée par revêtement par pulvérisation cathodique dans une atmosphère gazeuse constituée d'azote, d'oxygène et d'argon, l'oxygène étant présent dans l'atmosphère en une quantité comprise entre 5 et 50 %.

9. Le procédé de la revendication 8, dans lequel l'oxygène est présent dans l'atmosphère en une quantité d'environ 10 %.

10. Le procédé de la revendication 9, dans lequel l'atmosphère comprend environ 30 % d'azote, environ 10 % d'oxygène et environ 60 % d'argon.

11. Le procédé selon l'une des revendications 7 à 10, dans lequel le revêtement par pulvérisation cathodique de la couche d'oxynitrure de silicium comprend l'utilisation d'une cible de silicium contenant de l'aluminium.

12. Le procédé de la revendication 11, dans lequel la cible comprend environ 8 % en poids d'aluminium.
